# EUROPEAN PATENT SPECIFICATION

(11) **EP 2 211 577 B1**
(45) Date of publication and mention of the grant of the patent: **16.11.2011**
(21) Application number: 09151086.7
(22) Date of filing: 22.01.2009
(51) Int. Cl.: H04W 48/16

(54) **Method for wireless system selection optimization**
Verfahren für die drahtlose Systemauswahloptimierung
Procédé pour l'optimisation de la sélection d'un système sans fil

(43) Date of publication of application: 28.07.2010
(60) Divisional application: 11183785.2
(73) Proprietor: RESEARCH IN MOTION LIMITED, Waterloo, Ontario N2L 3W8 (CA)
(72) Inventor: Plestid, Trevor, Waterloo Ontario N2L 3W8 (CA)
(74) Representative: Patel, Binesh

(56) References cited:
- WO-A-02/076117
- WO-A-2007/103975

## Description

### TECHNICAL FIELD

The present disclosure relates to wireless mobile networks and in particular to system selection by a wireless mobile device during initialization on a wireless network.

### BACKGROUND

In 3GPP wireless network deployments, carriers or service providers deploy multiple frequencies for distributing handling traffic capacity. During initialization, for example of a factory fresh device, or re-selection a wireless mobile device must scan a wide frequency range to determine the appropriate ARFCN (absolute radio frequency channel number) to enable access to the network as it has no knowledge yet as to which frequency is to be utilized. An exhaustive search can take a considerable length of time because there are a large number of potential frequencies to be scanned delaying a users initial access to the system. The scan typically occurs during initial start-up or when a 'full reset' type event occurs requiring the wireless mobile device to re-sync to the network. There is therefore a need for improved system selection by wireless mobile devices that reduces system access time.

WO 2007/103975 A2 discloses techniques for efficiently performing network selection using information stored at a terminal. The terminal may store coverage information for previously detected wireless networks, cell information for previously detected cells in wireless networks, usage information for previously accessed wireless networks, availability information for previously detected wireless networks, almanac information for cells in wireless networks (e.g., information on cells available at different locations and information for acquiring the cells), and/or other information that may be useful for network selection. The terminal may select a wireless network to attempt acquisition based on the stored coverage information and its current location, the stored cell information and information for the current location (e.g., an identity of a cell detected at the current location), the stored usage information, the stored availability information, and/or the stored almanac information.

WO 02/076117 A2 discloses a mobile communication device, and a method of connecting a mobile device to a preferred communication system. The mobile communication device includes a signal sender, a signal receiver, and a processor and memory. The processor and memory include a static table, and are in communication with the signal sender and the signal receiver. The processor and memory match a location of the device directly to at least one preferred system. The mobile communication system includes at least one base station and the at least one mobile communication device. The method includes the step of locating of the mobile communication device, the step of converting the location generated into a position range, the step of matching the position range to at least one preferred SID index for the position range using the lookup table, the step of selecting the preferred SID from a roaming list, wherein the preferred SID is corespondent to the at least one preferred SID index, and the step of connecting the mobile communication device to a channel correspondent to the preferred system indicated by the preferred SID.

### SUMMARY

It is an object of the present invention to provide a method of system selection in a wireless mobile device according to claim 1. It is a further object of the present invention to provide a wireless mobile device according to claim 7. It is a further object of the present invention to provide a method of enabling system selection by a plurality of wireless mobile devices in a 36pp wireless network according to claim 8. In a further aspect of the invention, a server for enabling system selection by a plurality of wireless mobile devices according to claim 15 is provided Referred embodiments are defined in the dependent claims.

### BRIEF DESCRIPTION OF THE DRAWINGS

Further features and advantages of the present disclosure will become apparent from the following detailed description, taken in combination with the appended drawings, in which:
Figure 1 shows a block diagram of a wireless mobile device;
Figure 2 shows a system diagram of server based system selection optimization;
Figure 3 shows a method of ARFCN selection in a wireless mobile device using internal location data;
Figure 4 shows a method of ARFCN selection in a wireless mobile device using a GPS location data; and
Figure 5 shows a method of generating and maintaining ARFCN tables at a server.

It will be noted that throughout the appended drawings, like features are identified by like reference numerals.

### DETAILED DESCRIPTION

3GPP wireless networks are uniquely identified by a specific Mobile Country Code (MCC) and a specific Mobile Network Code (MNC). Wireless mobile devices are provisioned by carriers (service providers) to have a preferred MCC and MNC. In addition, when the carrier has roaming agreements a preferred list may be stored in a Subscriber Identity Module (SIM), a Universal SIM (USIM), or some other non-volatile memory module resident within the wireless mobile device. The MCC and MNC is utilized by the wireless mobile device to determine which system or network it should be operating on. However, the device must still scan the available frequencies to determine the appropriate ARFCN (absolute radio frequency channel number) to access the system. As wireless mobile devices have no notion of which ARFCNs to first scan, the scan is exhaustive which can take a very long time.

To accelerate the ability of a wireless mobile device to access a system during initialization or re-selection, a table or service book identifying known ARFCNs associated with systems is provided. The wireless mobile device can then initiate scanning to access the system using a known ARFCN associated with the likely system rather than having to scan all possible ARFCNs. The table can be provisioned during manufacture or delivered to the wireless mobile device upon registration in the field over-the-air for storage with the device. The table identifies routing area identifier (RAI) defining a MCC.MNC and an associated ARFCN for the particular network. When the wireless mobile device must acquire a system, location related data such as the MCC.MNC associated with the device can be determined from information stored on the SIM card in the device. Alternatively, location data can be based upon proprietary handset branding data associated with the operating software load in the device stored in flash memory 144. This information is then used to look up an ARFCN associated with the RAI combination enabling the device to tune directly to the ARFCN reducing required search time. The RAI in the table may include LAC (location area code) and RAC (routing area code) information providing additional granularity if different ARFCN's are used throughout the system. Alternatively, a GPS (Global Positioning System) receiver integrated in the device may be used to determine a location of the device prior to initialization enabling a location look-up in the ARFCN table. By providing an ARFCN to the device prior to network access initial scans are much quicker thus decreasing the effective "time to find first channel" when powering on for the first time and enhancing the users first use experience. Further, even subsequent to a successful network access, the handset system selection may be improved with prior knowledge of ARFCNs in it's current location. Examples are when a handset needs to rescan, for example, within RF coverage holes, or when a users manual wishes to rescan for frequencies.

The ARFCN table may be generated based upon information provided directly by carriers and stored on a server connected to the network or accessible during manufacturing or provided by a protocol where handsets already in field report in to a central server the ARFCNs that are being seen. The table may be retrieved from the server and provided to a mobile device at manufacture or during initial programming. In addition the server may be connected to one or more networks enabling updates to the ARFCN table to be received from carrier or from devices on the networks to update ARFCN table information. The updated ARFCN tables can then be provided to devices as required.

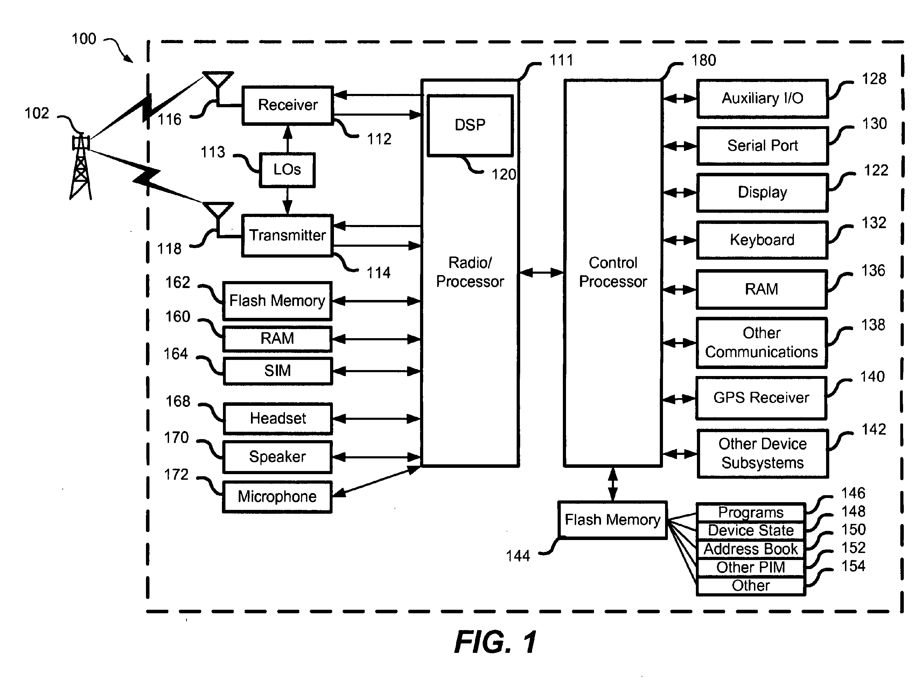

Figure 1 is a block diagram of a wireless mobile device 100 incorporating a communication subsystem having both a receiver 112 and a transmitter 114, as well as associated components such as one or more embedded or internal antenna elements 116 and 118, local oscillators (L0s) 113, and a processing module such as a digital signal processor (DSP) 120. The particular design of the communication subsystem will be dependent upon the communication network in which the device is intended to operate such as in a GSM, EDGE, UMTS, or 3GPP LTE networks.

The wireless mobile device 100 performs synchronization, registration or activation procedures by sending and receiving communication signals over the network 102. Signals received by antenna 116 through communication network 100 are input to receiver 112, which may perform such common receiver functions as signal amplification, frequency down conversion, filtering, channel selection and the like, and in the example system shown in Figure 1, analog to digital (A/D) conversion. A/D conversion of a received signal allows more complex communication functions such as demodulation, decoding and synchronization to be performed in the DSP 120.

In a similar manner, signals to be transmitted are processed, including modulation and encoding for example, by DSP 120 and input to transmitter 114 for digital to analog conversion, frequency up conversion, filtering, amplification and transmission over the communication network 102 via antenna 118. DSP 120 not only processes communication signals, but also provides for receiver and transmitter control. For example, the gains applied to communication signals in receiver 112 and transmitter 114 may be adaptively controlled through automatic gain control algorithms implemented in DSP 120.

Wireless mobile device 100 preferably includes a radio processor 111 and a control processor 180 which together control the overall operation of the device. DSP 120 is located on radio processor 111. Communication functions are performed through radio processor 111.

Radio processor 111 interacts with receiver 112 and transmitter 114, and further with flash memory 162, random access memory (RAM) 160, the subscriber identity module 164, a headset 168, a speaker 170, and a microphone 172.

Control processor 180 interacts with further device subsystems such as the display 122, flash memory 144, random access memory (RAM) 136, auxiliary input/output (I/O) subsystems 128, serial port 130, keyboard 132, other communications 138, GPS receiver 140 and other device subsystems generally designated as 142.

Some of the subsystems shown in Figure 1 perform communication-related functions, whereas other subsystems may provide "resident" or on-device functions. Notably, some subsystems, such as keyboard 132 and display 122, for example, may be used for both communication-related functions, such as entering a text message for transmission over a communication network, and device-resident functions such as a calculator or task list.

Software used by radio processor 111 and control processor 180 is preferably stored in a persistent store such as flash memory 144 and 162, which may instead be a read-only memory (ROM) or similar storage element (not shown). Those skilled in the art will appreciate that the operating system, specific device applications, or parts thereof, may be temporarily loaded into a volatile memory such as RAM 136 and RAM 160. Received communication signals may also be stored in RAM 136.

As shown, flash memory 144 can be segregated into different areas for computer programs 146, device state 148, address book 150, other personal information management (PIM) 152 and other functionality such as the ARFCN table generally designated as 154. These different storage types indicate that each program can allocate a portion of flash memory 144 for their own data storage requirements. Control processor 180, in addition to its operating system functions, preferably enables execution of software applications on the mobile station.

For voice communications, overall operation of wireless mobile device 100 is similar, except that received signals would preferably be output to the speaker 170 or headset 168 and signals for transmission would be generated by the microphone 172. Alternative voice or audio I/O subsystems, such as a voice message recording subsystem, may also be implemented on mobile station 102.

Serial port 130 in Figure 1 would normally be implemented in a personal digital assistant (PDA)-type wireless mobile device for which synchronization with a user's desktop computer (not shown) may be desirable, but is an optional device component. Such a port 130 would enable a user to set preferences through an external device or software application and would extend the capabilities of wireless mobile device 100 by providing for information or software downloads to wireless mobile device 100 other than through a wireless communication network. The alternate download path may for example be used to load an encryption key onto the device through a direct and thus reliable and trusted connection to thereby enable secure device communication.

Other device subsystems 142, such as a short-range communications subsystem, is a further optional component which may provide for communication between wireless mobile device 100 and different systems or devices, which need not necessarily be similar devices. For example, the subsystem 142 may include an infrared device and associated circuits and components or a Bluetooth™ communication module to provide for communication with similarly enabled systems and devices.

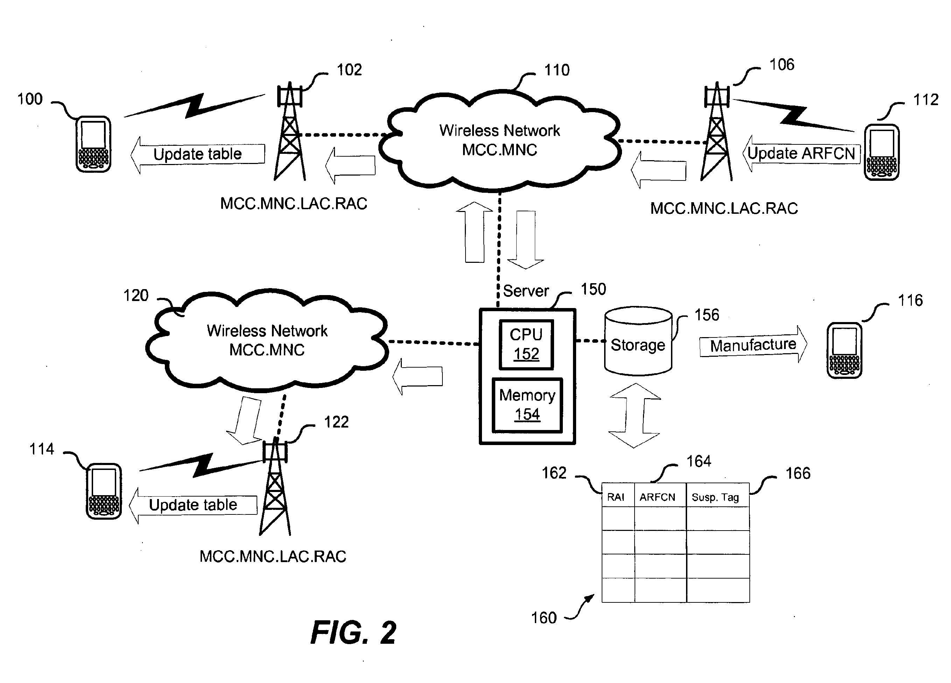

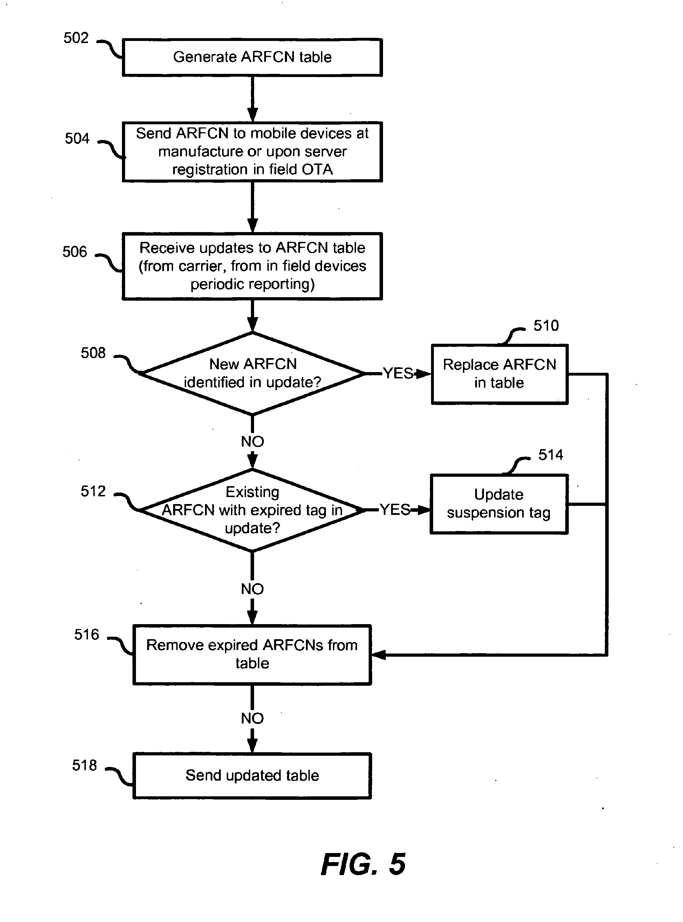

Figure 2 shows a system diagram of server based system selection optimization. Server 150 may be coupled to storage device 156. The storage device 156 stores ARFCN table 160 and computer executable code for generating the ARFCN table and sending and receiving updates. The ARFCN table comprises an entry for every RAI (routing area identifier) 162. Depending on the granularity required, the RAI may be solely based upon MCC.MNC or be further resolved by MCC.MNC.LAC.RAC, where LAC (location area code) and RAC (routing area code) are used if the wireless mobile device has data associated with the last LAC.RAC used while accessing the network. One or more ARFCNs 164 can then be associated with each RAI entry. The ARFCN may be provided by a carrier or by wireless mobile device provided updates as discussed in connection with Figure 5. If device updates to the ARFCN table are enabled, a suspension tag 166 can also be identified for each entry. The suspension tag 166 identifies a date at which the identified ARFCN is deemed be expired and will be removed form the table unless an update is received from a device on the network identifying the ARFCN as active. The wireless mobile device uses the tag as a trigger to only send an update only when necessary. The ARFCN table may also include GPS coordinates providing a latitude and longitude, (not shown) associated with each RAI entry if a GPS receiver coupled to device is used during initialization or re-acquisition. The GPS coordinates in the ARFCN may be based on a range defining a service area for the RAI and ARFCN.

Each system 110 and 120 have a unique MCC.MNC. Base stations 102, 106 and 122 can then be assigned to a unique MCC.MNC.LAC.RAC if different AFRCN are utilized within the same MCC.MNC network. The wireless network 110 and 120 are in communication with server 150. The server 150 may be a central server or be resident on each carriers network. The server 150 contains software stored in memory 154 and executed by one or more central processing units 152 for generating and sending (or pushing) ARFCN tables to devices in addition to receiving updates from wireless mobile devices accessing the system. During manufacture or initial programming by the carrier a wireless mobile device 116 receives the ARFCN table or service book which would be stored within non-volatile memory 144 of the device.

In additional to directly editing the ARFCN table, updates may be provided from devices operating on the networks once initialized. For example, device 112 can provide an update to the server 150 identifying an ARFCN change associated either with the carrier's wireless network 110 MCC.MNC or even the BTS 106 MCC.MNC.LAC.RAC. The updates are provided once the device is operating on the network and has determined that the ARFCN used for network access does not match the ARFCN identified in the ARFCN table. Updates to the ARFCN table can then be pushed to devices on the network such as devices 100 and 114 at periodic intervals to unsure the most current information is available.

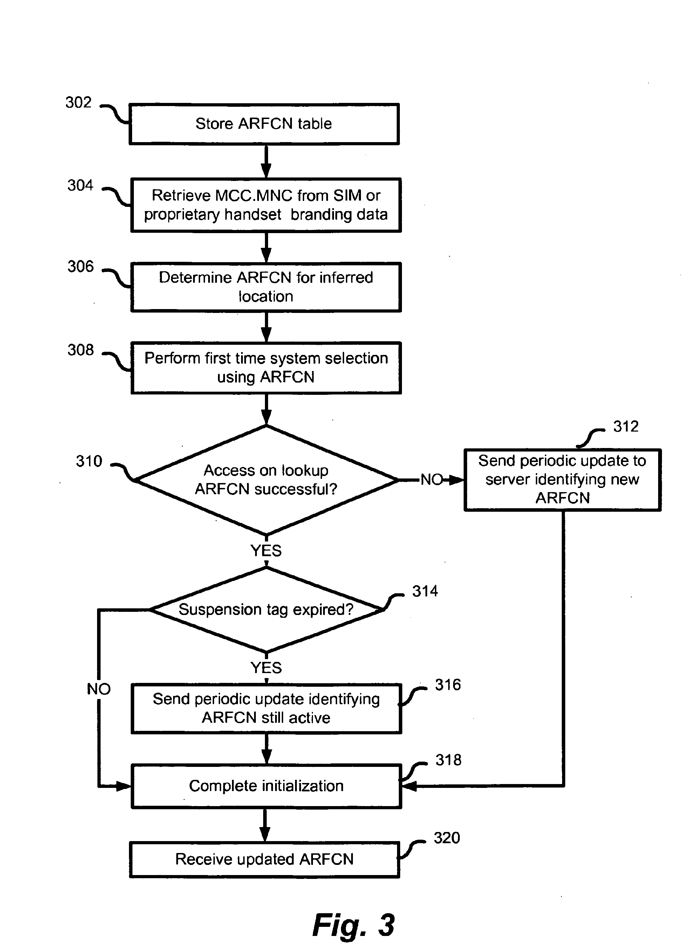

Figure 3 shows a method of ARFCN selection using a network identifier retrieved from the wireless mobile device 100. This method is distinct in that it bootstraps the handset with information on the assumption that most times, the initial use will be in the home MCC.MNC on particular ARFCNs. The wireless mobile device 100 receives an ARFCN table either during manufacture or initial programming or provisioning. The ARFCN is then stored 302 in memory of the wireless mobile device. When the device powers up, prior to acquiring a network and registering on the network, the device retrieves location data to determine or infer 304 what is the primary carrier associated with the device either by retrieving MCC.MNC information from the SIM or by accessing proprietary handset branding The handset may use and empty MRU (most recently used AFRCN) as a trigger to determine its likely location via carrier branding and thereby make use of the ARFCN table. information which identifies an associated MCC.MNC. A look-up 306 in the ARFCN table is performed to determine the associated ARFCN for the MCC.MNC. System selection is then performed 308 using the selected ARFCN frequency or a series of applicable ARFCNs. If the ARFCN used is not successful at accessing the system, NO at 310, a periodic update can then be sent 312 over the wireless network to server 150 providing details regarding the MCC.MNC and the ARFCN used to access the system. If the system is accessed using the ARFCN, YES at 310, it can then be determined if the suspension tag associated with the ARFCN has expired 314. The suspension tag expiry is defined in relation to a date or time interval associated with the RAI entry in the ARFCN table 160 assigned by the server upon creation of the table. If the tag has expired, YES at 314, a periodic update can be sent to server 150 identifying that the ARFCN is still active 316. The suspension tag can then be increased at the next ARFCN update. If the suspension tag has not expired, NO at 314, initialization or re-acquisition is completed at 318. At 320 the device may then receive an updated ARFCN table for use during future re-initializations.

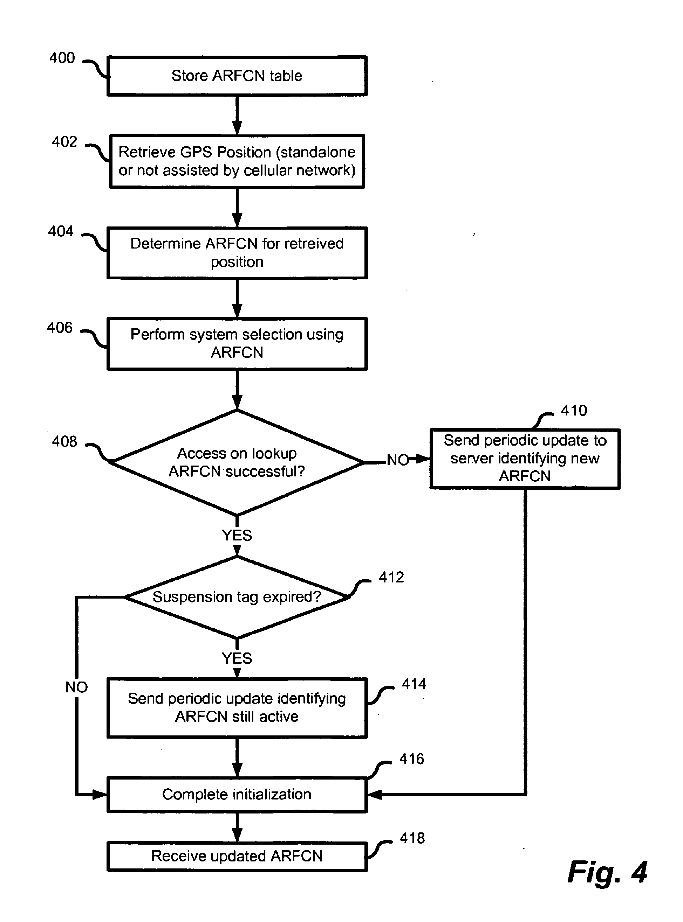

Figure 4 shows a method of system selection using location data such as GPS location data. The wireless mobile device 100 receives an ARFCN table, either during manufacture or initial programming or provisioning. The ARFCN is then stored 400 in memory of the wireless mobile device. The wireless mobile device retrieves GPS location information 402 from an internal GPS receiver or from an external GPS source coupled to the device prior to system access during power up or re-initialization. As the device is not on the network, network assisted GPS is not utilized. A look-up 404 in the ARFCN table is performed to determine the associated ARFCN for the associated location. System selection is then performed 406 using the selected ARFCN frequency. If the ARFCN used is not successful at accessing the system, NO at 408, a periodic update can then be sent 410 to server 150 providing details regarding the GPS location and the ARFCN used to access the system after successful system acquisition. If the system is accessed using the ARFCN, YES at 408, it can then be determined if the suspension tag associated with the ARFCN has expired 412. If the tag has expired, YES at 412, a periodic update can be sent to server 150 identifying that the ARFCN is still active 414. The suspension tag can then be increased at the next ARFCN update. If the suspension tag has not expired, NO at 412, initialization or re-acquisition is completed at 416. At 418 the device may then receive an updated ARFCN table for use during future re-initializations.

Figure 5 shows a method of maintaining ARFCN tables at a server. The server may be used to provide ARFCN a stand alone server or integrated as software with other servers during the manufacturing processes or coupled to the carrier wireless network to provide updates. An initial ARFCN table is generated 502 for loading to the wireless mobile devices. The ARFCN table may be populated by either information provided by carriers or populated based upon data acquired from devices on the associated networks via update messages. The ARFCN table is then sent to wireless mobiles devices either during manufacture or initial programming 504. Alternatively the table may be provided upon registration of the wireless mobile device with the server over the air and pushed to the device. If the wireless mobile device 100 software is configured to send updates, the server receives updates from information obtained by devices accessing systems or directly provided by carriers 506. If a new ARFCN is identified in the update, YES at 508, the ARFCN for the associated RAI is replaced 510. If the ARFCN is not new, NO at 508, it is then determined if the update is associated with an existing ARFCN that has an expired suspension tag. If the suspension tag is expired in the update, YES at 512, the suspension tag is updated to a new value 514. If the tag in the updated is not expired, NO at 512, expired ARFCNs can then be removed from the table periodically 516 based upon a pre-defined time interval after the suspension tag expiry. The updated table can then be sent to devices 518 or provided for upload to new devices during manufacturing or provisioning.

While a particular embodiment of the present method for providing wireless system selection optimization has been described herein, it will be appreciated by those skilled in the art that changes and modifications may be made thereto without departing from the disclosure in its broadest aspects and as set forth in the following claims.

## Claims

1. A method of system selection in a wireless mobile device (100), the wireless mobile device operable on a 3GPP wireless network (110, 120), the method comprising:
storing (302, 400) an absolute radio frequency channel number (ARFCN) table (160) in memory of the wireless mobile comprising a plurality entries, each entry comprising location data, an associated ARFCN identifier and a suspension tag (166) identifying an expiry period of the entry;
retrieving (304, 402) location data associated with the wireless mobile device prior to accessing the wireless network;
determining (306, 404) an ARFCN (164) from an entry associated with the retrieved location data, from the ARFCN table stored in memory; and performing system selection (308, 406) using the determined ARFCN:
if system access on the determined ARFCN access was not successful, sending (312, 410) a periodic update to a server (150) identifying a new ARFCN not present in the ARFCN table on which the wireless mobile device successfully initialized for the retrieved location data; and
if system access on the determined ARFCN access was successful, determining (314, 412) if the suspension tag associated with the ARFCN has expired and sending (316, 414) an update to the server (150) identifying that ARFCN is still active.

2. The method of claim 1 wherein the location data entries in ARFCN table identifies a routing area identifier (RAI) (162) comprising a mobile country code (MCC) and mobile network code (MNC).

3. The method of claim 2 wherein the RAI further comprises a location area code (LAC) and routing area code (RAC).

4. The method of any one of claims 1 to 3 wherein the retrieved (402) location data is a global positioning system (GPS) location retrieved from a GPS receiver (140) coupled to the wireless mobile device (100), and the location data entries in the ARFCN table contains associated GPS location coordinates.

5. The method of any one of claims 1 to 4 where in the suspension flag defines a date at which the identified ARFCN is deemed to be expired and will be removed from the table unless an update is received.

6. The method of any one of claims 1 to 5 wherein the stored ARFCN table is received (320, 418) by the wireless mobile device as an updated ARFCN table over-the-air (320) through the wireless network.

7. A wireless mobile device in a 3GPP wireless network (110, 120), the wireless mobile device (100) comprising:
a memory (144); and
a control processor (180) for executing instructions in the memory comprising the method steps of claims 1 to 6.

8. A method of enabling system selection by a plurality of wireless mobile devices (100, 112, 114, 116) in a 3GPP wireless network (110, 120), the method comprising:
generating (502) an absolute radio frequency channel number (ARFCN) table (160) comprising a plurality of entries, each entry comprising location data, an associated ARFCN identifier and a suspension tag (166) identifying an expiry period; and
sending (504) the ARFCN table (160) to each of the plurality of wireless mobile devices wherein each of the plurality of wireless mobile devices utilizes (100, 112, 114, 116) a selected ARFCN (164) associated with determined location data prior to accessing the wireless network;
receiving updates (506) from the plurality of wireless mobile devices (100, 112, 114, 116) through the wireless network, the updates generated when:
when a suspension tag associated with an ARFCN has expired and
access on the ARFCN was successful and therefore still active;
or
when attempted access by a wireless mobile device on an identified
ARFCN was not successful and a new ARFCN has been identified for the associated location data by the wireless mobile
device;
updating (510, 514) entries in the ARFCN table based upon the updates received from the plurality of wireless mobile devices; and
sending (518) the updated ARFCN to the plurality of wireless mobile devices over the wireless network.

9. The method of claim 8 wherein the location data is associated with routing area identifiers (RAls) (162) comprising a mobile country code (MCC) and mobile network code (MNC).

10. The method of claim 9 wherein the RAI further comprises a location area code (LAC) and routing area code (RAC).

11. The method of any one of claims 8 to 10 further comprising periodically removing (516) ARFCN entries which have expired and an update has not been received from at least one wireless mobile device.

12. The method of any one of claims 8 to 11 wherein when an update is received for an expired ARFCN, the suspension flag for the ARFCN entry is updated to be unexpired.

13. The method of any one of claims 8 to 12 where in the suspension flag defines a date at which the identified ARFCN is deemed to be expired and will be removed from the table unless an update is received.

14. The method of any one of claims 8 to 13 where in the location data is a global positioning system (GPS) coordinate.

15. A server (150) for enabling system selection by a plurality of wireless mobile devices in a 3GPP wireless network (100, 112, 114, 116), the server comprising:
a memory (152); and
a processor (154) for executing instructions in the memory comprising the steps of the method of any one of claims 8 to 14

## Patentansprüche

1. Verfahren zur Systemauswahl in einer drahtlosen mobilen Vorrichtung (100), wobei die drahtlose mobile Vorrichtung in einem drahtlosen 3GPP-Netzwerk (110, 120) betriebsfähig ist, wobei das Verfahren aufweist:
Speichern (302, 400) einer ARFCN(absolute radio frequency channel number)-Tabelle (160) in einem Speicher der drahtlosen mobilen Vorrichtung, die eine Vielzahl von Einträgen aufweist, wobei jeder Eintrag Positionsdaten, einen zugehörigen ARFCN-Identifizierer und ein Aufhebungs-Tag (166) aufweist, das einen Ablauf des Eintrags identifiziert;
Abrufen (304, 402) von Positionsdaten, die zu der drahtlosen mobilen Vorrichtung gehören, vor einem Zugreifen auf das drahtlose Netzwerk;
Bestimmen (306, 404) einer ARFCN (164) aus einem Eintrag, der zu den abgerufenen Positionsdaten gehört, aus der ARFCN-Tabelle, die in dem Speicher gespeichert ist; und
Durchführen einer Systemauswahl (308, 406) unter Verwendung der bestimmten ARFCN:
wenn ein Systemzugang auf dem bestimmten ARFCN-Zugang nicht erfolgreich ist, Senden (312, 410) einer regelmäßigen Aktualisierung an einen Server (150), die eine neue ARFCN identifiziert, die nicht in der ARFCN-Tabelle vorhanden ist, auf der die drahtlose mobile Vorrichtung erfolgreich initialisierte für die abgerufenen Positionsdaten; und
wenn ein Systemzugang auf dem bestimmten ARFCN-Zugang erfolgreich ist, Bestimmen (314, 412), ob das Aufhebungs-Tag, das zu der ARFCN gehört, abgelaufen ist, und Senden (316, 414) einer Aktualisierung an den Server (150), die identifiziert, dass die ARFCN weiterhin aktiv ist.

2. Verfahren gemäß Anspruch 1, wobei die Positionsdaten-Einträge in der ARFCN-Tabelle einen Routing-Bereichs-Identifizierer (RAI - routing area identifier) (162) identifizieren, der einen MCC (mobile country code) und einen MNC (mobile network code) aufweist.

3. Verfahren gemäß Anspruch 2, wobei der RAI weiter einen Positionsbereichscode (LAC - location area code) und einen Routing-Bereichs-Code (RAC - routing area code) aufweist.

4. Verfahren gemäß einem der Ansprüche 1 bis 3, wobei die abgerufenen (402) Positionsdaten eine GPS(global positioning system)-Position sind, die von einem GPS-Empfänger (140) abgerufen wird, der mit der drahtlosen mobilen Vorrichtung (100) verbunden ist, und wobei die Positionsdateneinträge in der ARFCN-Tabelle zugehörige GPS-Positions-Koordinaten enthalten.

5. Verfahren gemäß einem der Ansprüche 1 bis 4, wobei das Aufhebungs-Flag ein Datum definiert, an dem die identifizierte ARFCN als abgelaufen betrachtet wird und aus der Tabelle entfernt wird, außer es wird eine Aktualisierung empfangen.

6. Verfahren gemäß einem der Ansprüche 1 bis 5, wobei die gespeicherte ARFCN-Tabelle durch die drahtlose mobile Vorrichtung als eine aktualisierte ARFCN-Tabelle über-die-Luft (320) über das drahtlose Netzwerk empfangen wird (320, 418).

7. Drahtlose mobile Vorrichtung in einem drahtlosen 3GPP-Netzwerk (110, 120), wobei die drahtlose mobile Vorrichtung (100) aufweist:
einen Speicher (144); und
einen Steuerungsprozessor (180) zum Ausführen von Anweisungen in dem Speicher, die die Verfahrensschritte gemäß den Ansprüchen 1 bis 6 aufweisen.

8. Verfahren zum Ermöglichen einer Systemauswahl durch eine Vielzahl von drahtlosen mobilen Vorrichtungen (100, 112, 114, 116) in einem drahtlosen 3GPP-Netzwerk (110, 120), wobei das Verfahren aufweist:
Erzeugen (502) einer ARFCN(absolute radio frequency channel number)-Tabelle (160), die eine Vielzahl von Einträgen aufweist, wobei jeder Eintrag Positionsdaten, einen zugehörigen ARFCN-Identifizierer und ein Aufhebungs-Tag (166) aufweist, das einen Ablauf identifiziert; und
Senden (504) der ARFCN-Tabelle (160) an jede der Vielzahl von drahtlosen mobilen Vorrichtungen, wobei jede der Vielzahl von drahtlosen mobilen Vorrichtungen eine ausgewählte ARFCN (164) benutzt (100, 112, 114, 116), die zu bestimmten Positionsdaten gehört, vor einem Zugreifen auf das drahtlose Netzwerk;
Empfangen von Aktualisierungen (506) von der Vielzahl von drahtlosen mobilen Vorrichtungen (100, 112, 114, 116) über das drahtlose Netzwerk,
wobei die Aktualisierungen erzeugt werden, wenn:
ein Aufhebungs-Tag, das zu einer ARFCN gehört, abgelaufen ist und
ein Zugang auf der ARFCN erfolgreich war und deswegen weiterhin aktiv ist; oder
wenn ein versuchter Zugang durch eine drahtlose mobile Vorrichtung auf einer identifizierten ARFCN nicht erfolgreich war und eine neue ARFCN identifiziert wird für die zugehörigen Positionsdaten durch die drahtlose mobile Vorrichtung;
Aktualisieren (510, 514) von Einträgen in der ARFCN-Tabelle basierend auf den Aktualisierungen, die von der Vielzahl von drahtlosen mobilen Vorrichtungen empfangen werden; und
Senden (518) der aktualisierten ARFCN an die Vielzahl von drahtlosen mobilen Vorrichtungen über das drahtlose Netzwerk.

9. Verfahren gemäß Anspruch 8, wobei die Positionsdaten den Routing-Bereichs-Identifizierern (RAls - routing area identifiers) (162) zugeordnet werden, die einen MCC (mobile country code) und einen MNC (mobile network code) aufweisen.

10. Verfahren gemäß Anspruch 9, wobei der RAI weiter einen Positionsbereichscode (LAC - location area code) und einen Routing-Bereichs-Code (RAC - routing area code) aufweist.

11. Verfahren gemäß einem der Ansprüche 8 bis 10, das weiter aufweist ein regelmäßiges Entfernen (516) von ARFCN-Einträgen, die abgelaufen sind und für die keine Aktualisierung von zumindest einer drahtlosen mobilen Vorrichtung empfangen wurde.

12. Verfahren gemäß einem der Ansprüche 8 bis 11, wobei, wenn eine Aktualisierung für eine abgelaufene ARFCN empfangen wird, das Aufhebungs-Flag für den ARFCN-Eintrag als nicht-abgelaufen aktualisiert wird.

13. Verfahren gemäß einem der Ansprüche 8 bis 12, wobei das Aufhebungs-Flag ein Datum definiert, an dem die identifizierte ARFCN als abgelaufen betrachtet wird und aus der Tabelle entfernt wird, außer es wird eine Aktualisierung empfangen.

14. Verfahren gemäß einem der Ansprüche 8 bis 13, wobei in den Positionsdaten eine GPS(global positioning system)-Koordinate ist.

15. Server (150) zum Ermöglichen einer Systemauswahl durch eine Vielzahl von drahtlosen mobilen Vorrichtungen in einem drahtlosen 3GPP-Netzwerk (100, 112, 114, 116), wobei der Server aufweist:
einen Speicher (152); und
einen Prozessor (154) zum Ausführen von Anweisungen in dem Speicher,
die die Schritte des Verfahrens gemäß einem der Ansprüche 8 bis 14 aufweisen.

## Revendications

1. Procédé de sélection d'un système dans un dispositif mobile sans fil (100), le dispositif mobile sans fil pouvant fonctionner sur un réseau sans fil 3GPP (110, 120), le procédé comprenant les étapes consistant à :
stocker (302, 400) une table (160) de numéros de canaux radiofréquences absolus (dits ARFCN) dans la mémoire du dispositif mobile sans fil comprenant plusieurs entrées, chaque entrée comprenant des données de localisation, un identifiant du ARCFN associé et une étiquette de suspension (166) identifiant une période d'expiration de l'entrée ;
extraire (304, 402) des données de localisation associées au dispositif mobile sans fil avant l'accès au réseau sans fil ;
déterminer (306, 404) un ARFCN (164) à partir d'une entrée associée aux données de localisation extraites, depuis la table de ARFCN stockée en mémoire ; et
réaliser une sélection de système (308, 406) en utilisant le ARFCN déterminé :
si l'accès au système sur l'accès sur le ARFCN déterminé n'a pas réussi, envoyer (312, 410) une mise à jour périodique à un serveur (150) identifiant un nouvel ARFCN qui ne se trouve pas dans la table de ARFCN sur lequel le dispositif mobile sans fil s'est bien initialisé pour les données de localisation extraites ; et
si l'accès au système sur l'accès sur le ARFCN déterminé a réussi, déterminer (314, 412) si l'étiquette de suspension associée au ARFCN a expiré et envoyer (316, 414) une mise à jour au serveur (150) identifiant que le ARFCN est toujours actif.

2. Procédé de la revendication 1, dans lequel les entrées de données de localisation dans la table de ARFCN identifient un identifiant de zone de routage (RAI) (162) comprenant un indicatif de pays du mobile (MCC) et un code de réseau du mobile (MNC).

3. Procédé de la revendication 2, dans lequel le RAI comprend en outre un code de zone de localisation (LAC) et un code de zone de routage (RAC).

4. Procédé de l'une quelconque des revendications 1 à 3, dans lequel les données de localisation extraites (402) sont une localisation par système mondial de radiorepérage (GPS) extraite d'un récepteur GPS (140) couplé au dispositif mobile sans fil (100), et les entrées de données de localisation dans la table de ARFCN contient des coordonnées de localisation GPS associées.

5. Procédé de l'une quelconque des revendications 1 à 4, dans lequel le drapeau de suspension définit une date à laquelle le ARFCN identifié est supposé avoir expiré et sera supprimé de la table à moins de recevoir une mise à jour.

6. Procédé de l'une quelconque des revendications 1 à 5, dans lequel la table de ARFCN stockée est reçue (320, 418) par voie hertzienne (320) à travers le réseau sans fil par le dispositif mobile sans fil sous forme de table de ARFCN mise à jour.

7. Dispositif mobile sans fil dans un réseau sans fil 3GPP (110, 120), le dispositif mobile sans fil (100) comprenant :
une mémoire (144) ; et
un processeur de commande (180) propre à exécuter des instructions dans la mémoire comprenant les étapes du procédé des revendications 1 à 6.

8. Procédé permettant la sélection d'un système par une pluralité de dispositifs mobiles sans fil (100, 112, 114, 116) dans un réseau sans fil 3GPP (110, 120), le procédé comprenant les étapes consistant à :
générer (502) une table (160) de numéros de canaux radiofréquences absolus (dits ARFCN) comprenant plusieurs entrées, chaque entrée comprenant des données de localisation, un identifiant du ARFCN associé et une étiquette de suspension (166) identifiant une période d'expiration ; et
envoyer (504) la table de ARFCN (160) à chacun de la pluralité de dispositifs mobiles sans fil où chacun de la pluralité de dispositifs mobiles sans fil utilise (100, 112, 114, 116) un ARFCN sélectionné (164) associé aux données de localisation déterminées avant l'accès au réseau sans fil ;
recevoir des mises à jour (506) à partir de la pluralité de dispositifs mobiles sans fil (100, 112, 114, 116) à travers le réseau sans fil, les mises à jour étant générée :
lorsqu'une étiquette de suspension associée à un ARFCN a expiré et que l'accès sur le ARFCN a réussi et est donc toujours actif ; ou
lorsqu'une tentative d'accès par un dispositif mobile sans fil sur un ARFCN identifié n'a pas réussi et qu'un nouvel ARFCN a été identifié pour les données de localisation associées par le dispositif mobile sans fil ;
mettre à jour (510, 514) des entrées dans la table de ARFCN sur la base des mises à jour reçues à partir de la pluralité de dispositifs mobiles sans fil ; et
envoyer (518) le ARFCN mis à jour à la pluralité de dispositifs mobiles sans fil à travers le réseau sans fil.

9. Procédé de la revendication 8, dans lequel les données de localisation sont associées à des identifiants de zones de routage (RAIs) (162) comprenant un indicatif de pays du mobile (MCC) et un code de réseau du mobile (MNC).

10. Procédé de la revendication 9, dans lequel le RAI comprend en outre un code de zone de localisation (LAC) et un code de zone de routage (RAC).

11. Procédé de l'une quelconque des revendications 8 à 10, comprenant en outre la suppression périodique (516) d'entrées ARFCN qui ont expiré et pour lesquelles aucune mise à jour n'a été reçue à partir d'au moins un dispositif mobile sans fil.

12. Procédé de l'une quelconque des revendications 8 à 11, dans lequel lorsqu'une mise à jour est reçue pour un ARFCN expiré, le drapeau de suspension pour l'entrée ARFCN est mis à jour pour devenir non expiré.

13. Procédé de l'une quelconque des revendications 8 à 12, dans lequel le drapeau de suspension définit une date à laquelle le ARFCN identifié est supposé avoir expiré et sera supprimé de la table à moins de recevoir une mise à jour.

14. Procédé de l'une quelconque des revendications 8 à 13, dans lequel les données de localisation sont des coordonnées du système mondial de radiorepérage (GPS).

15. Serveur (150) permettant la sélection d'un système par une pluralité de dispositifs mobiles dans un réseau sans fil 3GPP (100, 112, 114, 116), le serveur comprenant :
une mémoire (152) ; et
un processeur (154) propre à exécuter des instructions dans la mémoire comprenant les étapes du procédé de l'une quelconque des revendications 8 à 14.
